# EUROPÄISCHE PATENTSCHRIFT

(11) **EP 2 543 900 B1**
(45) Veröffentlichungstag und Bekanntmachung des Hinweises auf die Patenterteilung: **07.10.2015**
(21) Anmeldenummer: 12172862.0
(22) Anmeldetag: 21.06.2012
(51) Int. Cl.: F16C 33/60, F16C 33/64, F16C 19/38, B60B 27/00, F16C 35/067, F16D 3/16

(54) **Radlageranordnung**
Wheel bearing assembly
Agencement de roulement de roue

(30) Priorität: 06.07.2011 DE 102011078713
(43) Veröffentlichungstag der Anmeldung: 09.01.2013
(73) Patentinhaber: SAF-HOLLAND GmbH, 63856 Bessenbach (DE)
(72) Erfinder: Drewes, Olaf, 63743 Aschaffenburg (DE)
(74) Vertreter: Müller Schupfner & Partner Patent- und Rechtsanwaltspartnerschaft mbB

(56) Entgegenhaltungen:
- DE-A1-102009 031 625
- FR-A- 1 350 297
- JP-A- 2003 120 691
- US-A- 2 556 412

## Beschreibung

Die vorliegende Erfindung betrifft eine Radlageranordnung, insbesondere für Nutzfahrzeuge.

Radlageranordnungen der in der Rede stehenden Art sind aus dem Stand der Technik hinlänglich bekannt. Standardmäßig wird dabei eine Radnabe an einer Stelle zumeist über ein Wälzlager drehbar gelagert und an der Radnabe ein Rad des Nutzfahrzeuges festgelegt. Nachteilig ist bei derartigen Lageranordnungen jedoch, dass der Außenring des Wälzlagers in die Radnabe eingepresst werden muss und bei dieser Verbindung die Gefahr besteht, dass der Wälzlageraußenring sich relativ zur Radnabe verlagert, insbesondere verdreht. Die Folge einer derartigen Verdrehbewegung des Lageraußenrings relativ zur Radnabe kann zu starker Erhitzung und zu Beschädigungen des Wälzlageraußenrings oder der Radnabe führen.

Die DE 10 2009 031 625 A1 betrifft eine Wälzlageranordnung, die mindestens einen keramischen Innenring, der an einem metallischen Innenstützkörper befestigt ist, und mindestens einen keramischen Außenring, der an einem metallischen Außenstützkörper befestigt ist sowie eine dazwischen angeordnete Wälzkörperanordnung aufweist.

Die JP 2003 120 691, US-2,556,412 und FR 1 350 297 betreffen Lageranordnungen, bei welchen der Wälzkörper über einen Stützkörper mit dem Lagerinnenring und/oder dem Lageraußenring kontaktiert.

Aufgabe der vorliegenden Verbindung ist es, eine Radlageranordnung bereit zu stellen, bei welcher eine Verdrehbewegung des Lageraußenrings vermieden wird und welche einen geringen radialen Querschnitt, sowie eine hohe Belastbarkeit aufweist.

Diese Aufgabe wird gelöst mit einer Radlageranordnungig mit den Merkmalen des Anspruchs 1. Bevorzugte Ausführungsformen und Weiterentwicklungen der Erfindung ergeben sich aus den abhängigen Ansprüchen.

Erfindungsgemäß umfasst die Radlageranordnung eine Nabeneinheit, wobei die Nabeneinheit einen Nabenkörper mit einer Aussparung und einem Tragelement aufweist, wobei das Tragelement ringförmig ausgebildet ist und in der Aussparung des Nabenkörpers angeordnet und formschlüssig an der Innenseite des Nabenkörpers festgelegt ist. Der Nabenkörper weist erfindungsgemäß eine Aussparung auf, ist also bevorzugt ein rohrförmiger bzw. hülsenförmiger Körper. In der Aussparung des Nabenkörpers ist ein erfindungsgemäß ringförmiges Tragelement angeordnet. Bevorzugt sind das Tragelement und der Nabenkörper rotationssymmetrisch um eine Rotationsachse A ausgebildet und insbesondere bevorzugt ist das Tragelement parallel zu einer senkrecht zur Rotationsachse ausgerichteten Ebene angeordnet. Mit anderen Worten kann das Tragelement als ein um eine Rotationsachse rotatorisch ausgetragenes Profil beschrieben werden. Das Tragelement ist bevorzugt rotationssymmetrisch ausgebildet. Weiterhin ist das Tragelement an der Innenseite der Aussparung des Nabenkörpers angeordnet und formschlüssig an dieser festgelegt. Als Innenseite des Nabenkörpers wird bevorzugt die von der Aussparung freigeschnittene bzw. freigelegte Fläche innerhalb des Nabenkörpers definiert, wobei diese Fläche geeignete Vor- oder Rücksprünge aufweist, um das Tragelement formschlüssig aufzunehmen bzw. festzulegen. Vorteilhaft kann an der Innenseite des Nabenkörpers eine umlaufende Nut vorgesehen sein, in welcher das Tragelement formschlüssig aufgenommen bzw. festgelegt ist.

In einer bevorzugten Ausführungsform ist das Tragelement am Nabenkörper mit Hilfe einer Hinterschneidung formschlüssig an der Innenseite des Nabenkörpers festgelegt. Die Hinterschneidung am Nabenkörper verhindert bevorzugt, dass das Tragelement sich entlang der Rotationsachse relativ zum Nabenkörper verlagert. Dabei kann eine Hinterschneidung eine Verlagerung in nur einer Richtung, entlang der Rotationsachse, verhindern, wobei bevorzugt zumindest zwei Hinterschneidungen an beiden Seiten des Tragelements entlang der Rotationsachse vorgesehen sind. Mit anderen Worten ist die Hinterschneidung des Nabenkörpers eine entlang der Rotationsachse verlaufende Querschnittsveränderung, wobei das Tragelement im Bereich des größeren Querschnitts angeordnet ist und durch den Bereich des kleineren Querschnitts in einer Richtung gegen Verlagerung entlang der Rotationsachse gesichert ist. Bei einer bevorzugten rotationssymmetrischen Ausführung des Tragelementes bzw. des Nabenkörpers und der Aussparung des Nabenkörpers, ist die Hinterschneidung also definiert durch einen Bereich mit größerem Durchmesser, in welchem das Tragelement angeordnet ist, und einen Bereich mit kleinerem Durchmesser, welcher das Tragelement gegen Verlagerung längs der Rotationsachse in einer Richtung sichert.

In einer bevorzugten Ausführungsform weist das Tragelement eine Lauffläche auf, wobei ein Dickenverlauf des Tragelementes derart ausgebildet ist, dass bei Krafteinleitung auf die Lauffläche eine bestimmte Spannungsverteilung im Tragelement einstellbar ist. Bevorzugt ist die Lauffläche des Tragelementes, die nach innen weisende bevorzugt rotationssymmetrisch um die Rotationsachse gewölbte Fläche des Tragelements. Besonders bevorzugt dient die Lauffläche des Tragelementes dazu, Wälzkörper eines innerhalb des Tragelementes angeordneten Wälzlagers auf einer bevorzugt kreisförmig um die Rotationsachse verlaufenden Bahn zu halten. Diese Wälzkörper übertragen jeweils an der Kontaktfläche zwischen Wälzkörper und Lauffläche des Tragelementes Kräfte auf die Lauffläche und damit auf das Tragelement. In Folge dieser Krafteinleitung von den Wälzkörpern auf das Tragelement entstehen Spannungen im Material des Tragelements, welche bevorzugt nicht die Festigkeit des Herstellungsmaterials des Tragelements überschreiten sollen. Um einen günstigen Spannungsverlauf bzw. eine günstige Spannungsverteilung im Tragelement zu gewährleisten, ist bevorzugt die Dicke des Tragelementes derart ausgelegt sein, dass bei den hohen zu erwartenden und nur punktuell von den Wälzkörpern auf die Lauffläche übertragenen Belastungen, die im Tragelement entstehenden Spannungen möglichst gleichmäßig im Material verteilt werden und insbesondere Spannungsspitzen vermieden werden. Bevorzugt kann die Dicke des Tragelementes als Materialstärke in Richtung der, auf die Lauffläche eingeleiteten, resultierenden Kraft definiert werden. Da diese Kraft jedoch im tatsächlichen Betrieb nur schwer zu ermitteln ist bzw. variieren kann, ist die Dicke des Tragelementes bevorzugt als die Materialstärke des Tragelementes senkrecht zur Lauffläche definiert. Alternativ bevorzugt kann die Dicke des Tragelementes auch als Materialstärke des Tragelementes in Radialrichtung, also senkrecht zur Rotationsachse definiert sein. Es ist besonders bevorzugt, dass die Dicke des Tragelementes an den Stellen größer ist, an denen eine höhere auftretende Spannung zu erwarten ist. Weiterhin ist es bekannt und soll im Fall der vorliegenden Erfindung nur erwähnt sein, eventuell auftretende Kerbwirkung und daraus resultierende Spannungsspitzen durch Abrundung von Körperkanten, bzw. Nutkanten und Vorsprüngen, zu verringern. Insbesondere zu beachten ist hierbei die, unter anderem bei Kugellagern auftretende, Hertzsche Flächenpressung, bei der im Mittelpunkt der Berührungsfläche zwischen der Lauffläche des Tragelementes und des Wälzkörpers eine maximale Spannung auftritt. Diese Spannungsspitzen können bevorzugt durch eine günstige Materialverteilung bzw. Dickenverteilung am Tragelement verringert werden.

Erfindungsgemäß weist das Tragelement an seiner Kontaktfläche zum Nabenkörper zumindest bereichsweise Vorsprünge und/oder Rücksprünge auf, die mit korrespondierenden, am Nabenkörper vorgesehenen Rücksprüngen und/oder Vorsprüngen in Eingriff stehen, um das Tragelement formschlüssig gegen Verlagerung relativ zum Nabenkörper zu sichern. Als Kontaktfläche des Tragelementes zum Nabenkörper wird bevorzugt die Außenfläche des Tragelementes definiert, welche mit einer Innenfläche bzw. mit mehreren Innenflächen des Nabenkörpers in Kontakt steht und an dieser/diesen festgelegt ist. In dieser Kontaktfläche des Tragelementes sind bevorzugt Vertiefungen, also Rücksprünge, oder Nasen, bzw. nasenförmige Auswölbungen, also Vorsprünge, eingefügt, welche mit dem jeweils korrespondierenden Gegenüber, d. h. ein Vorsprung bevorzugt mit einem Rücksprung und ein Rücksprung bevorzugt mit einem Vorsprung, am Nabenkörper korrespondiert bzw. in Eingriff steht. Es ist zu beachten, dass bei Rücksprüngen im Tragelement das Material bzw. die Materialstärke des Tragelementes empfindlich verringert werden kann und es zu Kerbwirkungen und hohen auftretenden Spannungen im Bereich des Rücksprunges in der Kontaktfläche des Tragelementes kommen kann. Um diesen Effekt zu vermeiden, ist es bevorzugt, dass Rücksprünge im Tragelement nur eine sehr geringe Tiefe aufweisen. Bevorzugt liegt das Verhältnis Tiefe des Rücksprungs zu Dicke des Tragelements etwa im Bereich zwischen 0,03 bis 0,05. Aus dem selben Grund ist es auch bevorzugt, dass sowohl Rücksprünge als auch Vorsprünge, die an der Kontaktfläche des Tragelementes vorgesehen sind, keine scharfen Kanten, sondern nur stark abgerundete Kanten aufweisen und so Kerbwirkung und Spannungsspitzen vermieden oder verringert sind. Der Formschluss zwischen Vorsprüngen bzw. Rücksprüngen an Tragelement und Nabenkörper sichert das Tragelement insbesondere gegen Verdrehung relativ zum Nabenkörper.

In einer bevorzugten Ausführungsform ist der Nabenkörper derart auf das Tragelement aufgeschrumpft, dass eine kraftschlüssige Verbindung zwischen Nabenkörper und Tragelement gebildet ist. Neben der formschlüssigen Verbindung zwischen Tragelement und Nabenkörper ist also auch eine kraftschlüssige Verbindung bevorzugt. Diese kraftschlüssige Verbindung wird besonders bevorzugt unter Ausnutzung der thermischen Ausdehnung des bevorzugt metallenen Herstellungsmaterials des Nabenkörpers hergestellt. In einer besonders vorteilhaften Ausführungsform ist der Nabenkörper um das Tragelement herum gegossen, wobei sich der Nabenkörper nach Abkühlung zusammenzieht und ein Pressverband zwischen Nabenkörper und Tragelement entsteht. Das Tragelement wird dabei bevorzugt als Teil des Gusskernes, welcher in die Gussform, in der der Nabenkörper gegossen wird, integriert ist, verwendet und es entsteht während des Gießens bevorzugt auch eine stoffschlüssige Verbindung zwischen Tragelement und Nabenkörper. Weiterhin bevorzugt kann es sein, dass der Nabenkörper in erwärmtem Zustand ausreichend ausgedehnt ist, sodass sein engster Querschnitt bzw. der engste Querschnitt der Hinterschneidung an der Innenseite des Nabenkörpers, über das Tragelement hinweggestülpt werden kann und der Nabenkörper sich bei anschließender Abkühlung zusammenzieht und wiederum einen Pressverband bzw. eine kraftschlüssige Verbindung mit dem Tragelement eingeht. Bei einer bevorzugten Ausführungsform, in der das Tragelement mittels eines Schleudergussverfahrens in den Nabenkörper eingegossen wird, ist es von Vorteil, als Herstellungsmaterial für den Nabenkörper ein Material zu verwenden, das einen hohen thermischen Ausdehnungskoeffizienten aufweist, wobei der Nabenkörper vor dem Schleudergussverfahren erwärmt wird, anschließend das Tragelement unter Drehung des Nabenkörpers in diesen eingegossen wird. Während des anschließenden gleichzeitigen Abkühlen und Zusammenziehen von Nabenkörper und Tragelement, zieht sich der Nabenkörper bevorzugt stärker zusammen, bzw. schrumpft stärker als das Tragelement, und es entsteht ein Pressverband zwischen Nabenkörper und Tragelement.

In einer weiterhin bevorzugten Ausführungsform weist der Querschnitt des Tragelementes an der zum Nabenkörper weisenden Seite eine Schnittkante mit konvexer Krümmung auf und die Schnittkante der Lauffläche ist eine Gerade. In dieser bevorzugten Ausführungsform ist die Lauffläche also insbesondere geeignet, um zylinderförmige Wälzkörper zu führen, um also insbesondere ein Zylinderrollenlager aufzunehmen. Die konvexe Krümmung der Außenseite des Tragelementes vermeidet durch den Wegfall scharfer Kanten, oder nur gering gerundeter Kanten, besonders bevorzugt Kerbwirkung und verhindert auf diese Weise das Auftreten von Spannungsspitzen im Material des Tragelementes. Dabei kann es bevorzugt sein, die dickste Stelle der konvexen Krümmung des Tragelementes in der Mitte, also längs der Rotationsachse mittig am Tragelement, vorzusehen. Alternativ kann für die Dicke des Tragelements auch außermittig, also vor oder hinter der Mitte des Tragelementes in Richtung der Rotationsachse, ein Maximum vorgesehen sein.

In einer bevorzugten Ausführungsform weist der Querschnitt des Tragelementes an der zum Nabenkörper weisenden Seite eine Schnittkante mit runder, vorzugsweise kreisförmiger bzw. halbkreisförmiger Krümmung auf und die Schnittkante der Lauffläche ist konkav gekrümmt. Die konkav gekrümmte Lauffläche des Tragelementes ist bevorzugt dafür geeignet, tonnenförmige Wälzkörper oder kugelförmige Wälzkörper an der Lauffläche des Tragelementes zu führen. Da bei diesen tonnenförmigen oder kugelförmigen Wälzkörpern die maximale Flächenpressung auf die Lauffläche des Tragelementes zumeist in der Mitte der Lauffläche längs der Rotationsachse zu erwarten ist, ist es bevorzugt, das Tragelement in diesem Bereich zu verstärken. Dabei wird die Verstärkung des Tragelementes insbesondere durch eine kugelförmige bzw. halbkreisförmige Krümmung der Außenfläche des Tragelementes ermöglicht. Das ringförmige Tragelement weist bevorzugt eine ballige Außenfläche auf. In weiteren Ausführungsformen kann es auch bevorzugt sein, dass der Querschnitt des Tragelementes an der zum Nabenkörper hinweisenden Seite eine Schnittkante mit konkaver Krümmung aufweist, wobei also die Dicke des Tragelementes im Verlauf längs der Rotationsachse zunächst bis zu einem Minimum abnimmt, welches in bevorzugter Mitte des Tragelementes längs der Rotationsachse angeordnet ist, und anschließend wieder zunimmt, wobei die beiden Abschnitte größerer Dicke bevorzugt nach außen hin abgerundet sind. Mit dieser bevorzugten Konfiguration des Querschnitts des Tragelementes kann insbesondere die charakteristische Spannungsverteilung beim Überrollen eines zylinderförmigen Wälzkörpers unter Auftreten hoher Lasten vom Tragelement aufgenommen werden.

In einer insbesondere bevorzugten Ausführungsform ist das Tragelement aus einem Material höherer Festigkeit als der Nabenkörper ausgebildet. Das Material des Tragelementes muss insbesondere dazu geeignet sein, die dynamisch anschwellenden und abschwellenden Belastungen, die sich durch den Überlauf bzw. das Überrollen einzelner Wälzkörper punktuell von den Wälzkörpern auf das Tragelement übertragen, aufzunehmen. Bevorzugt besitzt dieses Material also eine hohe Festigkeit, bzw. auch eine höhere Zähigkeit in Kombination mit einer hohen Härte, wobei die Härte insbesondere die Lebensdauer des Tragelementes beeinflusst. Höhere Härte resultiert im Allgemeinen in einer höheren Lebensdauer, da der Verschleiß durch Abrasion vermindert ist, wobei die Härte jedoch nicht zu hoch sein darf, um eine zu große Sprödigkeit, welche wiederum zu spontanen Lagerschädigungen führen kann, zu vermeiden. Sowohl aus Kosten- als auch aus Gewichtsgründen ist der Nabenkörper aus einem leichteren und damit im Normalfall weniger stabilen bzw. weniger festen Material als das Tragelement ausgebildet. Insbesondere bevorzugt kann es sein, den Nabenkörper aus einer Aluminiumlegierung oder aus einem Kunststoff herzustellen.

In einer bevorzugten Ausführungsform ist in der Aussparung des Nabenkörpers eine Achseinheit drehbar um eine Rotationsachse über eine Lagereinheit gelagert, wobei die Lagereinheit die Achseinheit gegen Verlagerung relativ zur Nabeneinheit sichert und wobei sich die Lagereinheit am Tragelement abstützt. Bevorzugt ist der Nabenkörper drehbar relativ zu einer Achseinheit gelagert, wobei die Achseinheit bevorzugt ein rotationssymmetrisches und sich im Wesentlichen längs der Rotationsachse ausbreitendes bzw. erstreckendes Bauteil ist, insbesondere bevorzugt die Achse eines Fahrzeuges, insbesondere eines Nutzfahrzeuges. Nutzfahrzeuge unterscheiden sich von anderen Fahrzeugen, wie beispielsweise Personenkraftwagen, durch eine deutlich höhere Fahrzeugmasse und Nutzlast und daraus resultierenden höheren Belastungen, beispielsweise der Achsaufhängungen. Die Lagerung des Nabenkörpers an der Achseinheit wird mittels einer Lagereinheit hergestellt, wobei die Lagereinheit besonders bevorzugt in der Aussparung des Nabenkörpers angeordnet ist.

In einer bevorzugten Ausführungsform weist die Lagereinheit einen Lagerinnenring und Wälzkörper auf, wobei die Wälzkörper auf der Lauffläche des Tragelements und auf einer Außenfläche des Lagerinnenrings abrollen, um den Lagerinnenring gegen das Tragelement abzustützen und drehbar zu lagern. Bevorzugt ist die Lagereinheit also ein herkömmliches Wälzlager, wobei jedoch der Außenring des Wälzlagers weggelassen ist und dessen Funktion stattdessen vom Tragelement übernommen ist. Da das Tragelement aufgrund seiner Belastung bzw. spannungsoptimierten Auslegung wesentlich dünnwandiger als ein herkömmlicher Lageraußenring gestaltet werden kann, ergibt sich in diesem Punkt sowohl eine Materialeinsparung an teurem Lageraußenring-Herstellungswerkstoff, als auch eine Gewichtseinsparung, welche das Tragelement im Vergleich zu einem Lageraußenring erzielen kann. Um die Montage der Lagereinheit im Tragelement bzw. in der Aussparung des Nabenkörpers zu vereinfachen, ist es bevorzugt, dass die Wälzkörper von einem aus dem Stand der Technik bekannten Wälzkörperkäfig gehalten werden. Um den Lagerinnenring axial, also längs der Rotationsrichtung an der Achseinheit zu fixieren bzw. festzulegen, sind an der Achseinheit Vorsprünge vorgesehen, an welchen die Lagereinheit bzw. der Lagerinnenring anschlägt, wobei weitere Befestigungsmittel bzw. Distanzhülsen und Lagermuttern vorgesehen sind, welche den Lagerinnenring gegen den entsprechenden Anschlag pressen und so gegen Verlagerung längs der Rotationsachse sichern. Die Wälzkörper können bevorzugt kugelförmig, tonnenförmig, zylinderförmig oder auch kegelförmig sein, wobei besonders bevorzugt kegelförmige Wälzkörper verwendet werden sollen. Kegelförmige Wälzkörper können schräg zur Rotationsachse, also mit einem Winkelversatz der eigenen Drehachse des Wälzkörpers zur Rotationsachse, in der Lagereinheit angeordnet werden, und sowohl Kräfte in radialer Richtung, also quer zur Rotationsachse, also Kräfte in axialer Richtung, also längs der Rotationsachse übertragen. Um die von den Wälzkörpern übertragenen Kräfte entsprechend aufzunehmen, müssen die Laufflächen am Tragelement und am Wälzlagerinnenring die Form von Mantelflächen eines Kegelstumpfes aufweisen. Mit anderen Worten weisen die Schnittkanten der Laufflächen in der Schnittansicht jeweils einen Winkelversatz zur Rotationsachse auf und sind bevorzugt Geraden. Es kann auf diese Weise gewährleistet werden, dass die von den Wälzlagern übertragene resultierende Kraft, d. h. die resultierende Kraft aus den Kraftkomponenten in axialer und radialer Richtung, senkrecht auf die Lauffläche des Tragelementes bzw. senkrecht auf die Lauffläche des Wälzlagerinnenrings wirkt.

In einer bevorzugten Ausführungsform weist die Radlageranordnung zwei Tragelemente und zwei Lagereinheiten auf, wobei jeweils eine Paarung von Tragelement und Lagereinheit die Achseinheit gegen Verlagerung längs der Rotationsachse in einer ersten Richtung sichert und die jeweils zweite Paarung von Tragelement und Lagereinheit die Achseinheit gegen Verlagerung in der der ersten Richtung entgegengesetzten Richtung sichert. Mit anderen Worten kann die Achseinheit relativ zum Nabenkörper, also mittels zweier spiegelsymmetrisch zueinander ausgerichteten Paarungen von je einem Tragelement und einer Lagereinheit sowohl gegen Verlagerung in radialer Richtung, als auch gegen Verlagerung in axialer Richtung, also längs der Rotationsachse, gesichert und drehbar gelagert werden. Besonders bevorzugt bei dieser Auslegungsform sind wieder Lagereinheiten, die Kegelrollenlager als Wälzkörper verwenden. Alternativ könnte auch vorgesehen sein, ein Kugellager zu verwenden, wobei ein Kugellager sowohl Kräfte in radialer Richtung als auch Kräfte längs der Rotationsachse in beiden Richtungen übertragen kann. Bevorzugt können auch Pendellager verwendet werden, welche ebenfalls Kräfte sowohl in radialer Richtung als auch in beiden Richtungen längs der Rotationsachse übertragen können.

Weitere Vorteile und Merkmale ergeben sich aus der nachfolgenden beispielhaften Beschreibung bevorzugter Ausführungsformen der erfindungsgemäßen Radlageranordnung mit Bezug auf die beigefügten Figuren. Unterschiedliche Merkmale verschiedener Ausführungsbeispiele können im Rahmen der Erfindung miteinander kombiniert werden. Es zeigen:
- Fig. 1: eine Schnittansicht einer bevorzugten Ausführungsform der erfindungsgemäßen Radlageranordnung,
- Fig. 2: eine Schnittansicht einer bevorzugten Ausführungsform der erfindungsgemäßen Radlageranordnung, und
- Fig. 3: eine bereichsweise geschnittene perspektivische Ansicht einer bevorzugten Ausführungsform der erfindungsgemäßen Radlageranordnung

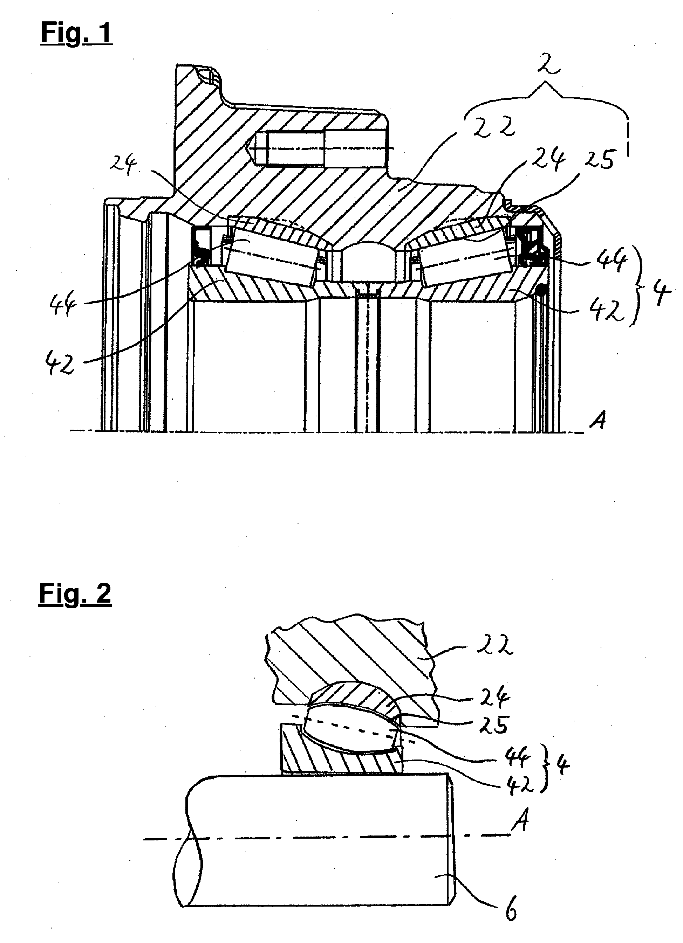

Fig. 1 zeigt eine bevorzugte Ausführungsform der erfindungsgemäßen Radlageranordnung, umfassend eine Nabeneinheit 2 und eine Lagereinheit 4. Die Nabeneinheit 2 weist einen Nabenkörper 22 auf, der bevorzugt rotationssymmetrisch um eine Rotationsachse A ausgelegt ist und eine Aussparung aufweist, welche ebenfalls rotationssymmetrisch zur Rotationsachse A im Nabenkörper 22 vorgesehen ist. Weiterhin weist die Nabeneinheit 2 zwei Tragelemente 24 auf, die jeweils längs der Rotationsachse zueinander versetzt an der Innenseite des Nabenkörpers 22 angeordnet sind und je eine Lauffläche 25 aufweisen. Wie in der Figur gezeigt, sind die Laufflächen 25 der Tragelemente 24 jeweils bevorzugt trichterförmig ausgebildet, d.h. in der Schnittansicht besitzen die Schnittkanten der Laufflächen 25 einen Winkelversatz zur Rotationsachse A. Dieses Merkmal dient dazu, dass die Laufflächen 25 der Tragelemente 24 sowohl Kräfte längs der Rotationsachse A, also in Axialrichtung, als auch Kräfte quer zur Rotationsachse A, also in Radialrichtung, aufnehmen können. Die Tragelemente 24 weisen eine Dicke auf, die längs der Rotationsachse A zunächst zunimmt und anschließend wieder abnimmt. In der in der Figur gezeigten bevorzugten Ausführungsform ist die Dicke der Tragelemente 24 also im Randbereich geringer als in der Mitte des Tragelements 24, wobei mit dieser Materialverteilung bevorzugt in der Mitte des Tragelementes 24 höhere auftretende Kräfte als im Randbereich aufgenommen werden können und die aus diesen Kräften resultierenden Spannungen im Material des Tragelements 24 gleichmäßig über das gesamte Tragelement 24 verteilt werden können und entsprechend auf einem niedrigen Niveau bzw. auf einem Niveau ohne Spannungsspitzen gehalten werden können. An der Innenseite der Tragelemente 24 ist je eine Lagereinheit 4 angeordnet, wobei die Lagereinheit 4 jeweils bevorzugt Wälzkörper 44 und einen Lagerinnenring 42 aufweist. Die Wälzkörper 44 der Lagereinheit 4 stützen sich jeweils, radial nach außen weisend, am Tragelement 24 ab und radial, also quer zur Rotationsachse A nach innen weisend, am Lagerinnenring 42 ab. Auf diese Weise wird der Nabenkörper 22 über das Tragelement 24 und die Wälzkörper 44 gegen Verlagerung in radialer Richtung, also quer zur Rotationsachse A, relativ zum Lagerinnenring 42 gesichert. Um den Nabenkörper 22 auch gegen Verlagerung längs der Rotationsachse A gegenüber dem Lagerinnenring 42 zu sichern, sind die Lauffläche 25, die Wälzkörper 44 und die Lauffläche des Lagerinnenrings 42 jeweils schräg im Vergleich zur Rotationsachse A angestellt. So verhindern die in der Figur links gezeigten Wälzkörper 44, dass sich der links gezeigte Lagerinnenring 42 relativ zum Nabenkörper 22 nach rechts hin verlagert und die in der Figur rechts gezeigten Wälzkörper 44 verhindern, dass der in der Figur rechts gezeigte Lagerinnenring 42 sich relativ zum Nabenkörper 22 nach links hin verlagert. Die beiden Lagerelemente 4 sichern bevorzugt eine, nicht in der Figur gezeigte, Achseinheit gegen Verlagerung sowohl in radialer als auch in axialer Richtung, bzw. quer und längs der Rotationsachse A, relativ zur Nabeneinheit 2.

In Figur 2 ist eine bevorzugte Ausführungsform der erfindungsgemäßen Radlageranordnungen gezeigt, wobei eine Achseinheit 6 über eine Lagereinheit 4 und ein Tragelement 24 am Nabenkörper 22 festgelegt ist. Es versteht sich, dass die in der Schnittansicht gezeigten Elemente rotationssymmetrisch um die Rotationsachse A angeordnet sind und daher nur auf der Oberseite der Rotationsachse A gezeigt sind, da sich selbstverständlich daraus die gesamte Schnittansicht ergibt. Die Lagereinheit 4 weist einen Lagerinnenring 42 und Wälzkörper 44 auf, wobei der gezeigte Wälzkörper 44 tonnenförmig ausgebildet ist. Weiterhin gezeigt ist eine bevorzugte Ausführungsform des Tragelementes 24, wobei die zum Wälzkörper 44 hin weisende Lauffläche 25 eine konkave Form aufweist und die zum Nabenkörper 22 hin weisende Außenfläche des Tragelementes 24 eine in der Schnittansicht bevorzugt konvexe Form aufweist. Weiterhin bevorzugt können für die Außenfläche des Tragelementes 24 auch kreisrunde bzw. ballförmige Geometrien sein oder komplexere, dem Spannungsverlauf im Tragelement 24 angepasste Geometrien der Außenfläche sein, bei denen in der Schnittansicht beispielsweise zunächst eine Querschnittszunahme mit anschließender Abnahme und einer daraufhin wiederum folgenden Zunahme der Dicke des Tragelements 24 vorgesehen sein. Nicht in der Figur gezeigt sind eventuell vorzusehende Anschläge oder Befestigungsmittel, um den Lagerinnenring 42 gegen Verlagerung relativ zur Achseinheit 6 festzulegen.

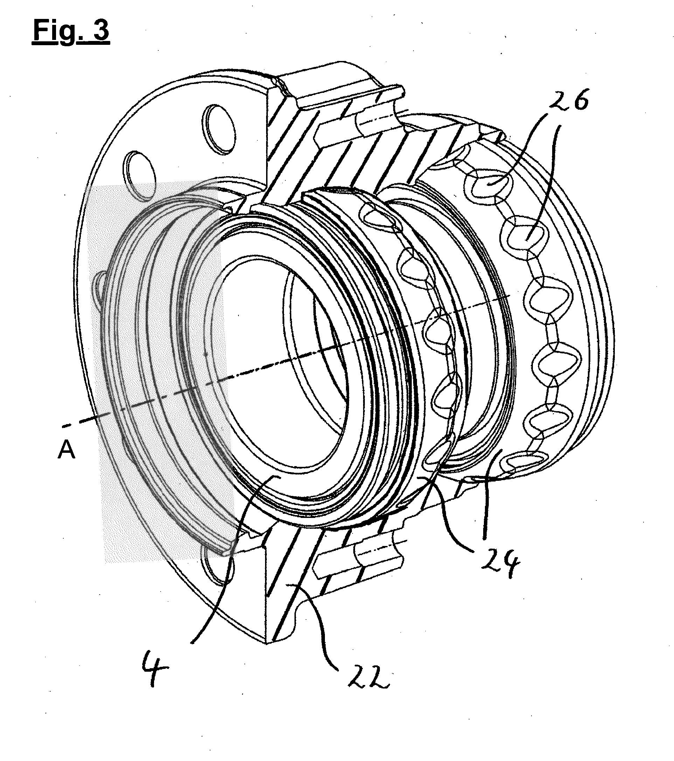

Figur 3 zeigt eine bereichsweise geschnittene perspektivische Ansicht einer Ausführungsform der erfindungsgemäßen Radlageranordnung, wobei insbesondere die Rücksprünge bzw. Vorsprünge, welche an der Kontaktfläche zwischen Tragelement 24 und Nabenkörper 22 vorgesehen sind, zu erkennen sind. Diese Rücksprünge bzw. Vorsprünge 26, in Fig. 1 mittels gestrichelter Linien dargestellt, dienen in erster Linie dazu, das Tragelement 24 gegen Verlagerung bzw. Verdrehung relativ zum Nabenkörper 22 zu sichern. Dabei greifen beispielsweise am Tragelement 24 vorgesehene Rücksprünge 26 in dafür am Nabenkörper 22 vorgesehene Vorsprünge ein und sichern so das Tragelement 24 gegen Verlagerung relativ zum Nabenkörper 22. Weiterhin in der Figur gezeigt ist die Lagereinheit 4, wobei jedoch der Blick auf die Wälzkörper 44 durch eine an der Vorderseite der Lagereinheit 4 vorhandene Dichtung versperrt wird.

### Bezugszeichenliste:

- 2: - Nabeneinheit
- 4: - Lagereinheit
- 6: - Achseineinheit
- 22: - Nabenkörper
- 24: - Tragelement
- 25: - Lauffläche
- 42: - Lagerinnenring
- 44: - Wälzkörper
- A: - Rotationsachse

## Patentansprüche

1. Radlageranordnung, insbesondere für Nutzfahrzeuge, umfassend eine Nabeneinheit (2),
wobei die Nabeneinheit (2) einen Nabenkörper (22) mit einer Aussparung und ein Tragelement (24) aufweist,
wobei das Tragelement (24) ringförmig ausgebildet ist und in der Aussparung des Nabenkörpers (22) angeordnet und formschlüssig an der Innenseite des Nabenkörpers (22) festgelegt ist,
**dadurch gekennzeichnet, dass** das Tragelement (24) an seiner Kontaktfläche zum Nabenkörper (22) zumindest bereichsweise Vorsprünge und/oder Rücksprünge (26) aufweist, die mit korrespondierenden, am Nabenkörper (22) vorgesehenen Rücksprüngen und/oder Vorsprüngen in Eingriff stehen, um das Tragelement (24) formschlüssig gegen Verlagerung relativ zum Nabenkörper (22) zu sichern.

2. Radlageranordnung nach Anspruch 1,
wobei das Tragelement (24) am Nabenkörper (22) mithilfe einer Hinterschneidung formschlüssig an der Innenseite des Nabenkörpers (22) festgelegt ist.

3. Radlageranordnung nach einem der vorhergehenden Ansprüche,
wobei das Tragelement (24) eine Lauffläche (25) aufweist, und
wobei ein Dickenverlauf des Tragelements (24) derart ist, dass bei Krafteinleitung auf die Lauffläche (25) eine bestimmte Spannungsverteilung im Tragelement (24) einstellbar ist.

4. Radlageranordnung nach einem der vorhergehenden Ansprüche, wobei der Nabenkörper (22) derart auf das Tragelement (24) aufgeschrumpft ist, dass eine kraftschlüssige Verbindung zwischen Nabenkörper (22) und Tragelement (24) gebildet ist.

5. Radlageranordnung nach einem der vorhergehenden Ansprüche, wobei der Querschnitt des Tragelements (24) an der zum Nabenkörper (22) weisenden Seite eine Schnittkante mit konvexer Krümmung aufweist und die Schnittkante der Lauffläche (25) eine Gerade ist.

6. Radlageranordnung nach einem der vorhergehenden Ansprüche, wobei der Querschnitt des Tragelements (24) an der zum Nabenkörper (22) weisenden Seite eine Schnittkante mit runder, vorzugsweise kreisförmiger Krümmung aufweist und die Schnittkante der Lauffläche (25) konkav gekrümmt ist.

7. Radlageranordnung nach einem der vorhergehenden Ansprüche, wobei das Tragelement (24) aus einem Material höherer Festigkeit als der Nabenkörper (22) ausgebildet ist.

8. Radlageranordnung nach einem der vorhergehenden Ansprüche, wobei in der Aussparung des Nabenkörpers (22) eine Achseinheit (6) drehbar um eine Rotationsachse (A) über eine Lagereinheit (4) gelagert ist, wobei die Lagereinheit (4) die Achseinheit (6) gegen Verlagerung relativ zur Nabeneinheit (2) sichert, und
wobei sich die Lagereinheit (4) am Tragelement (24) abstützt.

9. Radlageranordnung nach Anspruch 8,
wobei die Lagereinheit (4) einen Lagerinnenring (42) und Wälzkörper (44) aufweist,
wobei die Wälzkörper (44) auf der Lauffläche (25) des Tragelements (24) und auf einer Außenfläche des Lagerinnenrings (42) abrollen, um den Lagerinnenring (42) gegen das Tragelement (24) abzustützen und drehbar zu lagern.

## Claims

1. A wheel bearing assembly, in particular for commercial vehicles, comprising a hub unit (2),
wherein the hub unit (2) has a hub body (22) with a cavity and a support element (24),
wherein the support element (24) is circular and arranged in the cavity of the hub body (22) and fixed in a form-fitting manner at the inside of the hub body (22),
**characterized in that** the support element (24), at its contact surface with the hub body (22), at least in a certain area, has projections and/or recesses (26), which are in engagement with corresponding recesses and/or projections provided on the hub body (22) so as to secure the support element (24) in a form-fitting manner against displacement relative to the hub body (22).

2. The wheel bearing assembly of claim 1,
wherein the support element (24) is fixed in a form-fitting manner on the inside of the hub body (22) by means of an undercut.

3. The wheel bearing assembly of any one of the preceding claims,
wherein the support element (24) has a bearing surface (25), and
wherein a thickness course of the support element (24) is such that when a force is introduced onto the bearing surface (25), a certain stress distribution can be adjusted in the support element (24).

4. The wheel bearing assembly of any one of the preceding claims,
wherein the hub body (22) is shrunk-fit onto the support element (24) such that a force-fitting connection is formed between the hub body (22) and the support element (24).

5. The wheel bearing assembly of any one of the preceding claims,
wherein the cross-section of the support element (24) has a cutting edge with a convex curvature on the side facing towards the hub body (22), and the cutting edge of the bearing surface (25) is a straight line.

6. The wheel bearing assembly of any one of the preceding claims,
wherein the cross-section of the support element (24) has a cutting edge with a round, preferably circular curvature at the side facing towards the hub body (22), and the cutting edge of the bearing surface (25) is concavely curved.

7. The wheel bearing assembly of any one of the preceding claims,
wherein the support element (24) is made from a material of greater strength than the hub body (22).

8. The wheel bearing assembly of any one of the preceding claims, wherein, in the cavity of the hub body (22), an axle unit (6) is rotatably mounted about an axis of rotation (A) via a bearing unit (4),
wherein the bearing unit (4) secures the axle unit (6) against displacement relative to the hub unit (2), and
wherein the bearing unit (4) rests against the support element (24).

9. The wheel bearing arrangement of claim 8,
wherein the bearing unit (4) has an inner bearing ring (42) and rolling bodies (44),
wherein the rolling bodies (44) roll on the bearing surface (25) of the support element (24) and on an outer surface of the inner bearing ring (42) in order to support the inner bearing ring (42) against the support element (24) and in order to mount it rotatably.

## Revendications

1. Agencement formant palier de roue, en particulier pour véhicules utilitaires, incluant une unité formant moyeu (2),
dans lequel l'unité formant moyeu (2) comprend un corps de moyeu (22) avec un évidement et un élément porteur (24),
dans lequel l'élément porteur (24) est réalisé sous forme d'anneau et est agencé dans l'évidement du corps de moyeu (22) et immobilisé par coopération de formes contre la face intérieure du corps de moyeu (22),
**caractérisé en ce que** l'élément porteur (24) comprend au moins localement au niveau de sa surface de contact vers le corps de moyeu (22) des saillies et/ou des ressauts (26), qui sont engagé(e)s avec des ressauts et/ou des saillies correspondant(e)s prévu(e)s sur le corps de moyeu (22), afin de bloquer l'élément porteur (24) par coopération de formes à l'encontre d'un déplacement par rapport au corps de moyeu (22).

2. Agencement formant palier de roue selon la revendication 1, dans lequel l'élément porteur (24) est immobilisé sur le corps de moyeu (22) avec l'aide d'une contre-dépouille par coopération de formes contre la face intérieure du corps de moyeu (22).

3. Agencement formant palier de roue selon l'une des revendications précédentes, dans lequel l'élément porteur (24) comprend une surface active (25), et
dans lequel une évolution de l'épaisseur de l'élément porteur (24) est telle que lors d'une application d'une force sur la surface active (25) il est possible d'établir une répartition déterminée des contraintes dans l'élément porteur (24).

4. Agencement formant palier de roue selon l'une des revendications précédentes, dans lequel le corps de moyeu (22) est fretté sur l'élément porteur (24) de telle manière qu'il se forme une liaison par coopération de forces entre le corps de moyeu (22) et l'élément porteur (24).

5. Agencement formant palier de roue selon l'une des revendications précédentes, dans lequel la section transversale de l'élément porteur (24) comporte, sur le côté tourné vers le corps de moyeu (22), une arête de coupe avec une courbure convexe, et l'arête de coupe de la surface active (25) est une droite.

6. Agencement formant palier de roue selon l'une des revendications précédentes, dans lequel la section transversale de l'élément porteur (24) comporte, sur le côté tourné vers le corps de moyeu (22), une arête de coupe avec une courbure arrondie, de préférence en forme de cercle, et l'arête de coupe de la surface active (25) est incurvée de manière concave.

7. Agencement formant palier de roue selon l'une des revendications précédentes, dans lequel l'élément porteur (24) est réalisé en un matériau présentant une solidité plus forte que le corps de moyeu (22).

8. Agencement formant palier selon l'une des revendications précédentes,
dans lequel une unité d'essieu (6) est logée dans l'évidement du corps de moyeu (22) via une unité formant palier (4) de manière rotative autour d'un axe de rotation (A),
dans lequel l'unité formant palier (4) bloque l'unité d'essieu (6) à l'encontre d'un déplacement par rapport à l'unité de moyeu (2), et
dans lequel l'unité formant palier (4) s'appuie sur l'élément porteur (24).

9. Agencement formant palier selon la revendication 8,
dans lequel l'unité formant palier (4) comprend une bague intérieure de palier (42) et des corps de roulement (44),
dans lequel les corps de roulement (44) roulent sur la surface active (25) de l'élément porteur (24) et sur une surface extérieure de la bague intérieure de palier (42) afin de soutenir la bague intérieure de palier (42) contre l'élément porteur (24) et de la porter de manière rotative.
